# EUROPÄISCHE PATENTSCHRIFT

(11) **EP 0 872 416 B1**
(45) Veröffentlichungstag und Bekanntmachung des Hinweises auf die Patenterteilung: **29.10.2003**
(21) Anmeldenummer: 98106790.3
(22) Anmeldetag: 15.04.1998
(51) Int. Cl.: B64D 1/04, B64D 7/08, F41F 3/04

(54) **Haken-Anordnung bei Flugkörpern**
Hook device for flying bodies
Dispositif de crochets pour objets volants

(30) Priorität: 17.04.1997 DE 19715972
(43) Veröffentlichungstag der Anmeldung: 21.10.1998
(73) Patentinhaber: Bodenseewerk Gerätetechnik GmbH, 88662 Überlingen (DE)
(72) Erfinder: Knapp, Klaus-Dieter, 88662 Überlingen (DE); Fisch, Peter Gerd, 88662 Überlingen (DE); Bross, Dirk, 88662 Überlingen (DE)
(74) Vertreter: Weisse, Jürgen, Dipl.-Phys.

(56) Entgegenhaltungen:
- EP-A- 0 268 474
- US-A- 4 392 411

## Beschreibung

Die Erfindung betrifft eine Haken-Anordnung bei Flugkörpern enthaltend einen Haken mit gegenüberliegenden Tragschienen zur Führung des Flugkörpers in einem Startgerät, bei welcher flugkörperseitig eine Verdickung vorgesehen und der Haken mit dem Flugkörper über eine Schraubverbindung mit einer von außen eingeführten Schraube verbunden ist.

Aus der Luft abgeschossene Flugkörper sind in Startgeräten aufgehängt, die an den Tragflächen eines Flugzeugs vorgesehen sind. Die Flugkörper sind zu diesem Zweck mit "Haken" oder "Hangers" versehen, die in Halte-Mechanismen des Startgerätes verriegelt sind. Diese Haken sind Teile von im wesentlichen T-förmigem Querschnitt. Der "Querbalken" des "T" bildet zwei Tragschienen, die auf einwärtsgreifenden Führungsleisten des Startgerätes aufliegen. Üblicherweise sind an einem Flugkörper drei solche Haken vorgesehen. Die Haken werden beim Laden des Flugkörpers in das Startgerät durch Aussparungen der Führungsleisten hindurch nach oben eingeschoben. Dann wird der Flugkörper in Längsrichtung verschoben und in dem Halte-Mechanismus des Startgerätes verriegelt. Zum Abschießen des Flugkörpers wird der Halte-Mechanismus des Startgerätes entriegelt und der Raketenmotor gezündet. Der Flugkörper wird dann durch den Schub des Raketenmotors nach vom aus dem Startgerät hinausgedrückt, wobei die Haken über die Führungsleisten gleiten. Dabei müssen die Tragschienen der Haken umso länger sein, je weiter hinten am Flugkörper der Haken sitzt, damit die Tragschienen über die jeweils weiter vorn liegenden, den anderen Haken zugeordneten Ausnehmungen der Führungsleisten sicher hinweggleiten können.

Bei einem bekannten Flugkörper sind drei solcher Haken vorgesehen. Der vorderste Haken ist dabei unmittelbar an der rohrförmigen Zelle des Flugkörpers im Bereich eines Holmes angebracht. Das geschieht durch Schrauben, die von außen radial zu der zylindrischen Oberfläche des Flugkörpers eingeschraubt werden. Ein weiterer Haken ist an einer Schelle oder "Bauchbinde" ("belly band") befestigt, welche um die Zelle des Flugkörpers herumgelegt ist. Die Schelle sitzt dabei im Bereich des Raketenmotors, wo ein direktes Anschrauben des Hakens an die Zelle des Flugkörpers nicht möglich ist. Ein Haken ist an dieser Schelle durch Schrauben befestigt, die von innen her durch die Schelle und den Haken geführt sind. Ein dritter Haken bildet einen integralen Teil der Schelle.

Die EP 0 268 474 A1 zeigt eine Anordnung, bei welcher an einer Verdickung der Flugkörperzelle in Form einer kreisförmigen Platte zwei relativ dünne Rippen sich radial erstrecken und mit dem Kopf einer Schraube verbunden sind. Der Gewindeschaft der Schraube ragt radial nach außen. Der Haken greift mit einem hohlen Fuß über diese Anordnung, wobei die Schraube mit ihrem Gewindeschaft radial nach außen durch einen zentralen Durchbruch des Hakens ragt. Auf das herausragende Ende der Schraube ist eine Mutter aufgeschraubt. Diese Anordnung ist konstruktiv sehr aufwendig.

Die US 4 392 411 A zeigt eine Anordnung, bei welcher die Flugkörperzelle eine nach innen ragende Verdickung aufweist. Eine von außen durch den Haken geführter Bolzen ist durch die Verdickung geführt und von innen her mittels einer Mutter festgezogen. Eine weitere Mutter ist auf das in das Innere der Zelle ragende Ende des Bolzens aufgeschraubt und steht unter dem Einfluß einer Schraubenfeder, welche das Ende des Bolzens umgibt und sich an der Innenseite der Verdickung abstützt. Bei dieser Anordnung bildet die Verdickung einen nach innen ragenden Teil der Zelle. Ein solcher kann nicht an allen Stellen des Flugkörpers vorgesehen sein. Zum Lösen des Hakens müßten die Muttern vom Inneren des Flugkörpers her gelöst werden, was nicht möglich ist.

Die Haken sind starkem Verschleiß unterworfen. Das beeinträchtigt mit der Zeit die Funktionsfähigkeit. Ein Austausch der an den Schellen montierten Haken ist jedoch bei der bekannten Konstruktion nicht möglich. Um die von innen her durch die Schelle in den Haken geführten Schrauben zu lösen, müßte die Schelle abgenommen werden. Das ist aber nicht zulässig. Auch die Schelle mit einem integrierten Haken müßte in unzulässiger Weise abgenommen und ausgetauscht werden, um den Haken auszutauschen. Es kann auch sein, daß durch Umrüstung vorhandener Flugkörper die Haken an einer anderen Stelle längs des Flugkörpers angebracht werden müssen, wo z.B. kein Holm vorhanden und daher ein direktes Anschrauben des Hakens nicht möglich ist.

Für die Abmessungen und die Radiallage des Hakens sind genormte Grenzen vorgegeben, damit der Flugkörper in unterschiedliche aber genormte Startgeräte eingehängt werden kann.

Der Erfindung liegt die Aufgabe zugrunde, eine Haken-Anordnung der eingangs genannten Art so auszubilden, daß ein einfacher Austausch eines an beliebiger Stelle längs des Flugkörpers angebrachten Hakens möglich ist.

Erfindungsgemäß wird diese Aufgabe dadurch gelöst, daß in der nach außen vorstehenden Verdickung von der Außenseite her Gewindebohrungen angebracht sind und in dem Haken Bohrungen vorgesehen sind, durch welche die Schäfte von Schrauben von der Außenseite her hindurchgeführt und in die Gewindebohrungen der Verdickung eingeschraubt sind.

Die Befestigung des Hakens am Flugkörper erfolgt somit über eine Schelle oder eine Verdickung an der Struktur des Flugkörpers. Der Haken braucht daher nicht im Bereich eines Holmes angeordnet zu werden. Die Schelle kann vielmehr an jedem geeigneten Ort längs des Flugkörpers sitzen. Im Gegensatz zu der erwähnten Haken-Anordnung mit Schelle, bei welche sich die Schrauben von innen her durch die Schelle in den Haken erstrecken, in welchem hinreichend lange Gewindebohrungen vorgesehen werden können, erfolgt die Verschraubung erfindungsgemäß von außen her. Gewindebohrungen, in welche die Schrauben eingreifen, sind in der Verdickung der Schelle oder der rohrförmigen Flugkörper-Zelle vorgesehen. Dadurch kann ein verschlissener Haken abgenommen und durch einen neuen ersetzt werden, ohne eine Schelle abzunehmen. Paktisch wird der Haken zweiteilig gemacht, wobei der "Oberteil" die Tragschienen und damit die Verschleißteile enthält und der "Unterteil" als Verdickung an einer Schelle oder der rohrförmigen Zelle des Flugkörpers vorgesehen ist.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.
- Fig.1: zeigt eine Haken-Anordnung, bei welcher der Haken an einer Schelle oder "Bauchbinde" angebracht ist.
- Fig.2: zeigt eine Anordnung, bei welcher der Haken an einer Verdickung der rohrförmigen Zelle des Flugkörpers angebracht ist.
- Fig.3: ist eine schematisch-perspektivische Darstellung der Haken-Anordnung.

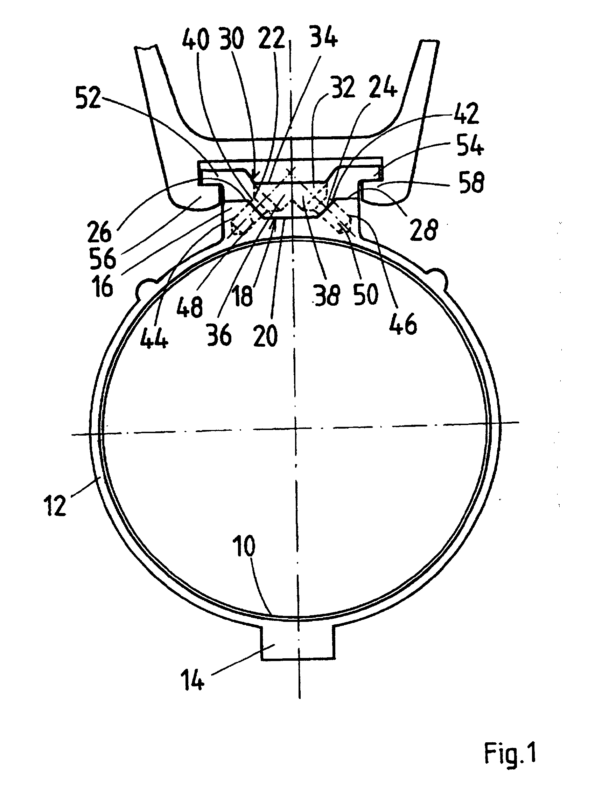

In Fig.1 ist um eine im wesentlichen rohrförmige Zelle 10 eines Flugkörpers eine Schelle 12 herumgelegt und durch eine Festzieh-Vorrichtung 14 um den Flugkörper festgezogen. Die Schelle 12 weist eine blockartige Verdickung 16 auf. Die Verdickung 16 bildet auf ihrer Außenseite einen Längskanal 18 von trapezförmigem Querschnitt mit einem tangentialen Grund 20 und unter einem Winkel von 45° zu dem Grund 20 verlaufenden Schrägflächen 22 und 24. An die Schrägflächen 22 und 24 schließen sich bei der Ausführung von Fig.1 wieder tangentiale Randflächen 26 und 28 an. In dem Längskanal 18 ist ein Haken oder "Hanger" 30 geführt. Der Haken 30 weist einen Mittelteil 32 mit einer zu dem Längskanal 18 und den Randflächen 26 und 28 komplementären Innenfläche, mit welcher der Haken 30 an der Verdickung geführt ist. In der tangentialen Außenfläche 34 sind schräg nach außen geneigte Vertiefungen 36 und 38 angebracht. An die Vertiefungen schließen sich Bohrungen 40 und 42 an, die mit Gewindebohrungen 44 bzw. 46 in der Verdickung 16 fluchten. Der Haken 30 ist durch Schrauben 48 und 50 mit der Verdickung 16 verschraubt. Die Achsen der Schrauben 48 und 50 erstrecken sich unter einem Winkel von 45° von der Außenfläche 34 nach außen, senkrecht zu den Schrägflächen 22 und 24 des Längskanals 18 und der dazu komplementären Innenfläche des Hakens 30. Die Köpfe der Schrauben 48 und 50 sind in den Vertiefungen 36 und 38 untergebracht. Der Haken 30 bildet zwei gegenüberliegende Tragschienen 52 und 54 zu beiden Seiten des Mittelteils 32. Die Tragschienen 52 und 54 sind mit dem Mittelteil aus einem Stück hergestellt und ragen seitlich über die Verdickung 16 und den Mittelteil 32 hinaus. Die Tragschienen 52 und 54 liegen auf Führungsleisten 56 bzw. 58 des Startgerätes auf. Der Aufbau des Startgerätes ist an sich bekannt und daher hier nicht näher beschrieben.

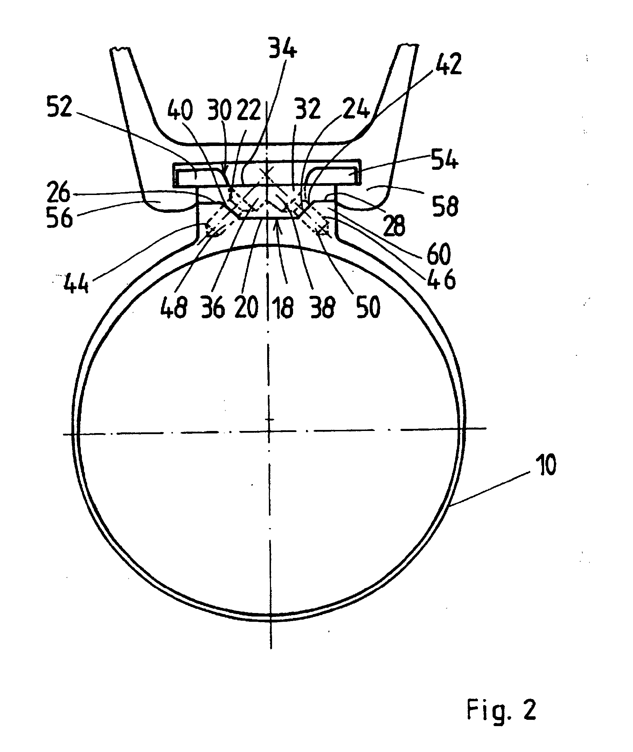

Die Ausführung von Fig.2 ist ähnlich aufgebaut wie die Ausführung von Fig.1, und entsprechende Teile sind mit den gleichen Bezugszeichen versehen wie dort.

Bei der Ausführung nach Fig.2 entfällt die Schelle 12. Stattdessen ist die Verdickung 60 an die rohrförmige Zelle 10 des Flugkörpers angeformt.

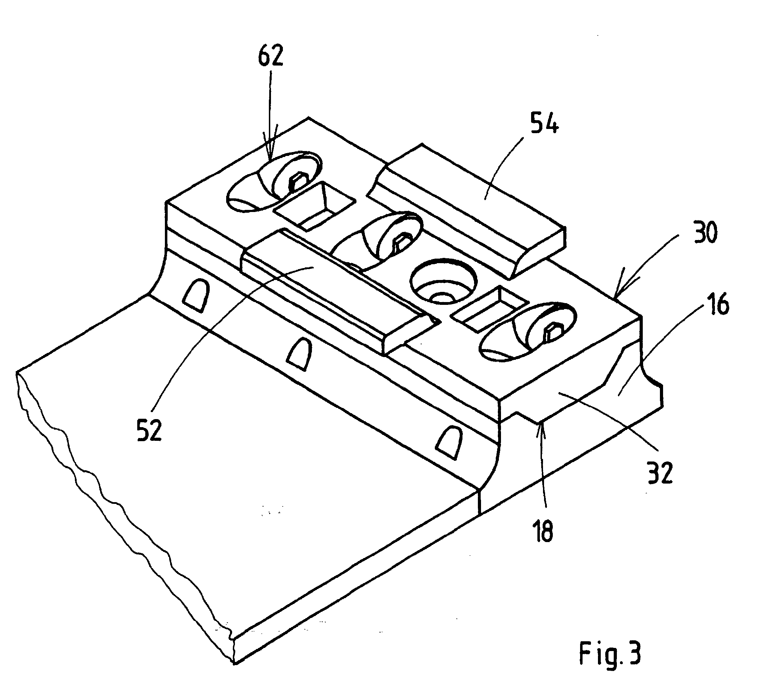

Fig.3 ist eine schematisch-perspektivische Darstellung der Verdickung 16 mit dem Haken 30. Der Mittelteil 32 und die Verdickung 16 sind länger als die Tragschienen 52 und 54. Mittelteil 32 und Verdickung 16 sind durch eine Mehrzahl von axial gegeneinander versetzten, unter 45° schräg nach außen verlaufenden Verschraubungen 62 miteinander in der beschriebenen Weise verbunden.

Durch die Verwendung schräg verlaufender Verschraubungen wird innerhalb der zulässigen, genormten Abmessungen eine sichere Verschraubung mit hinreichend langen Gewindebohrungen gewährleistet. Durch die schrägen Paßflächen und die schräg verlaufende Verschraubung ergibt sich eine günstige Kraftverteilung und höhere Festigkeit der Verschraubung, weil die Schrauben nicht auf Biegung beansprucht werden.

Die beschriebenen Haken-Anordnungen sind kompatibel mit vorhandenen Systemen. Bei einer durch Umrüstung des Flugkörpers bedingten Schwerpunkt-Verschiebung können die Schellen mit den Haken in Längsrichtung versetzt werden.

## Patentansprüche

1. Haken-Anordnung bei Flugkörpern enthaltend einen Haken (30) mit gegenüberliegenden Tragschienen (52,54) zur Führung des Flugkörpers in einem Startgerät, bei welcher flugkörperseitig eine Verdickung (16;60) vorgesehen und der Haken (30) mit dem Flugkörper über eine Schraubverbindung mit einer von außen eingeführten Schraube verbunden ist, **dadurch gekennzeichnet, daß** in der nach außen vorstehenden Verdickung von der Außenseite her Gewindebohrungen (44,46) angebracht sind und in dem Haken (30) Bohrungen vorgesehen sind, durch welche die Schäfte von Schrauben (48,50) von der Außenseite her hindurchgeführt und in die Gewindebohrungen (44,46) der Verdickung (16;60) eingeschraubt sind.

2. Haken-Anordnung nach Anspruch 1, **dadurch gekennzeichnet, daß** an dem Flugkörper eine die Zelle (10) des Flugkörpers umgebende, mit der Verdickung (16) versehene Schelle (12) angebracht ist.

3. Haken-Anordnung nach Anspruch 1 oder 2, **dadurch gekennzeichnet, daß** die Achsen der Gewindebohrungen (44,46) und der Schrauben (48,50) mit der Ebene der Tragschienen (52,54) einen Winkel bildet.

4. Haken-Anordnung nach Anspruch 3, **dadurch gekennzeichnet, daß** die Achsen der Gewindebohrungen (44,46) und Schrauben (48,50) unter 45° zur Ebene der Tragschienen (52,54) nach außen verlaufen.

5. Haken-Anordnung nach Anpruch 3 oder 4, **dadurch gekennzeichnet, daß**
(a) die Verdickung (16) einen Längskanal (18) von trapezförmigem Querschnitt aufweist,
(b) der Haken (30) einen an den Längskanal (18) angepaßten Mittelteil (32) aufweist,
(c) der Mittelteil (32) mit der Verdickung (16) durch schräg verlaufende Verschraubungen (44,48;46,50) verbunden ist, welche durch die Schrägseiten des Mittelteils (32) des Hakens (30) und des Längskanals (18) geführt sind, und
(d) die Tragschienen (52,54) sich zu beiden Seiten des Mittelteils (32) über die Verdickung (16) hinaus nach außen erstrecken.

6. Haken-Anordnung nach Anspruch 5, **dadurch gekennzeichnet, daß** der Mittelteil (32) und die Verdickung (16) länger sind als die Tragschienen (52,54) und durch eine Mehrzahl von axial gegeneinander versetzten Schrägverschraubungen (62;Fig.3) miteinander verbunden sind.

## Claims

1. Hanger assembly for missiles comprising a hanger (30) with opposite carrying rails (52,54) for guiding the missile in a launcher, wherein a missile-side enlargement (16,60) is provided and the hanger (30) is connected with the missile through a bolt connection with a bolt inserted from the outside, **characterised in that** threaded bores (44,46) are provided, from the outside, in the enlargement projecting to the outside, bores being provided in the hanger (30), the shafts of bolts (48,50) passing therethrough from the outside and being screwed into the thereaded bores (44,50) of the enlargement (16;60).

2. Hanger assembly as claimed in claim 1, **characterised in that** a strap (12) having the enlargement (16) and surrounding the airframe (10) of the missile is provided on the missile.

3. Hanger assembly as claimed in claim 1 or 2, **characterised in that** the axes of the threaded bores (44,46) and of the bolts (48,50) form an angle with the plane of the carrying rails (52,54).

4. Hanger assembly as claimed in claim 3, **characterised in that** the axes of the threaded bores (44,46) and bolts (48,50) extend outwards at an angle of 45° with respect to the plane of the carrying rails (52,54).

5. A hanger assembly as claimed in claim 3 or 4, **characterised in that**
(a) the enlargement (16) has a longitudinal channel (18) of trapezoidal cross section,
(b) the hanger (30) has a central portion (32) matching the longitudinal channel (18),
(c) the central portion (33) is connected with the enlargement (16) by oblique screw connections, which pass through the inclined side faces of the central portion (32) of the hanger (30) and of the longitudinal channel (18), and
(d) the carrying rails (52,54) extend, on both sides of the central portion, beyond the enlargement (16) outwards.

6. Hanger assembly as claimed in claim 5, **characterised in that** the central portion (32) and the enlargement (16) are longer than the carrying rails (52,54) and are interconnected through a plurality of oblique screw connections (62;Fig.3) axially offset with respect to each other.

## Revendications

1. Disposition de crochet pour missiles comprenant un crochet (30) muni de rails de support opposés (52,54) destinés à guider le missile dans un lanceur, pour laquelle un épaississement (16;60) est prévu du côté du missile et le crochet (30) est vissé au missile par l'intermédiaire d'une vis introduite par l'extérieur, **caractérisée en ce que** des perçages filetés (44,46) sont placés depuis le côté extérieur dans l'épaississement faisant saillie vers l'extérieur, et des perçages à l'intérieur desquels les tiges de vis (48,50) sont introduites par le côté extérieur et vissées dans les perçages filetés (44,46) de l'épaississement (16,60) sont prévus dans le crochet (30).

2. Disposition de crochet selon la revendication 1, **caractérisée en ce qu'**un collier de serrage (12) pourvu de l'épaississement (16) et entourant la cellule (10) du missile est placé sur le missile.

3. Disposition de crochet selon la revendication 1 ou 2, **caractérisée en ce que** les axes des perçages filetés (44,46) et des vis (48,50) forment un angle avec le plan des rails de support (52,54).

4. Disposition de crochet selon la revendication 3, **caractérisée en ce que** les axes des perçages filetés (44,46) et des vis (48,50) s'étendent vers l'extérieur à 45° par rapport au plan des rails de support (52,54).

5. Disposition de crochet selon la revendication 3 ou 4, **caractérisée en ce que**
(a) l'épaississement (16) présente un canal longitudinal (18) de section trapézoïdale,
(b) le crochet (30) présente un élément médian (32) adapté au canal longitudinal (18),
(c) l'élément médian (32) est relié à l'épaississement (16) par des raccords à vis (44,48 ; 46,50) inclinés qui sont introduits par les côtés inclinés de l'élément médian (32) du crochet (30) et du canal longitudinal (18), et
(d) les rails de support (52,65) s'étirent vers l'extérieur des deux côtés de l'élément médian (32) en dépassant l'épaississement (16).

6. Disposition de crochet selon la revendications 5, **caractérisée en ce que** l'élément médian (32) et l'épaississement (16) sont plus longs que les rails de support (52,54) et qu'ils sont reliés les uns aux autres par plusieurs raccords à vis inclinés (62 ; fig. 3) décalés axialement les uns par rapport aux autres.
